# EUROPEAN PATENT SPECIFICATION

(11) **EP 4 038 275 B1**
(45) Date of publication and mention of the grant of the patent: **13.09.2023**
(21) Application number: 20817493.8
(22) Date of filing: 13.11.2020
(51) Int. Cl.: F03D 9/17, F03D 9/19, F03D 9/25, F03D 9/32, F03D 5/06, B63H 9/071, B63H 9/072, B63B 25/14, B64C 31/06, F03D 5/04, B63J 3/04

(54) **KITE DRIVEN WATERCRAFT POWER GENERATING SYSTEM**
STROMERZEUGUNGSSYSTEM FÜR DRACHENBETRIEBENES WASSERFAHRZEUG
SYSTÈME DE GÉNÉRATION D'ÉNERGIE D'EMBARCATION ENTRAÎNÉ PAR CERF-VOLANT

(30) Priority: 13.11.2019 GB 201916516
(43) Date of publication of application: 10.08.2022
(73) Proprietor: OCEANERGY INNOVATION GmbH, 70180 Stuttgart (DE)
(72) Inventor: REINERS, Wolfram Johannes Bernd, Cape Town (ZA)
(74) Representative: Appleyard Lees IP LLP
(86) International application number: PCT/IB2020/060681
(87) International publication number: WO 2021/094987

(56) References cited:
- CN-A- 101 240 778
- DE-A1-102007 057 267
- DE-A1-102008 024 414
- DE-A1-102012 023 911
- ES-A1- 2 608 254
- US-A1- 2007 126 241
- ANTONELLO CHERUBINI ET AL: "Airborne Wind Energy Systems: A review of the technologies", RENEWABLE AND SUSTAINABLE ENERGY REVIEWS, vol. 51, 1 November 2015 (2015-11-01), pages 1461-1476, XP055486588, US ISSN: 1364-0321, DOI: 10.1016/j.rser.2015.07.053
- Ben Ruhe: "Using Kites to Generate Electricity: Plodding, Low Tech Approach Wins", Kite The Drachen Foundation Journal, No. 16 Fall 2004, 21 December 2004 (2004-12-21), page 2, 14-16, XP055011254, Seattle Retrieved from the Internet: URL:http://drupal.drachen.org/sites/defaul t/files/pdf/Journal Issue 16.pdf [retrieved on 2011-11-04]

## Description

### Technical field

The invention relates to a watercraft comprising a kite driven power generating system, more particularly a kite driven watercraft power generating system which is configured to, in a non-cyclic and/or continuous manner, harvest wind energy for watercraft propulsion as well as for conversion into storable energy.

### Background to the invention

Wind is seasonal and therefore, measured at a given location, the average wind speed experience during the windy season is higher, than the average wind speed during the remainder of the year. Therefore, by increasing the mobility of a wind harvesting device both its power output as well as capacity utilization can be improved.

The ideal wind harvesting device therefore needs to be mobile in order to exploit wind seasons by moving to global locations which "are in season".

For mobile wind harvesting devices which can move around to where the most wind is experienced the average wind speed experienced by the mobile harvesting device can be expected to be higher, than the average wind speed, compared to when the device was deployed at a fixed location over an extended period of time and passively waiting for wind.

This mobility feature is particularly important for a wind harvesting device which produces green electricity stored in hydrogen or other electro fuels. One of the advantages of mobility is that the required electrolyzer will have, over time, a higher efficiency rate with no or little interruptions, and this increased capacity utilization further leads to a higher return on investment. All these factors lead to lower production costs of these synthetic fuels.

In a similar fashion, this also applies to possible further equipment and facilities to convert the gained hydrogen into synthetic hydrocarbon fuels (gaseous or liquid) or other fuels. Stronger and more permanent winds, gained by mobility and smart navigation, will increase power output, capacity utilization, efficiencies, and return on investment for these facilities, and therefore will lead to significantly lower production costs of the resulting fuels.

In general, the highest wind speeds can be found on the oceans and the most reliable and permanent winds are found in specific regions of the oceans, for instance the trade wind belts, or between 40^{th} and 60^{th} degree of latitude.

Wind harvesting systems mountable on a mobile ship which can navigate to areas of most reliable, permanent and strong winds, will maximize the aforementioned critical energy generating factors and the amount of energy harvested over time.

Many known wind harvesting systems which generate electricity by driving a generator, have the disadvantage of being deployed at a fixed or quasi-fixed location, either connected to a land-based ground station (fixed or quasi-fixed, meaning it moves only short distances, for instance on a circular rail track), or to a water-based ground base, for instance in form of an anchored buoy.

Some electricity generating systems are mobile, however during transport from one location to another they do not produce electricity. The disadvantage associated with these kinds of systems is thus twofold, firstly, any transport utilizes energy, and secondly, during transport no energy is generated, which all together decreases the overall efficiency of the system, counterweighing the possible advantage to find more or better wind at the new location.

Conventional kite driven wind harvesting systems which apply the "kite pumping cycle principle" (also called two-phase discontinuous ground-generating energy production systems), produce their power output in a highly discontinuous manner, with alternating periods of power generation and power consumption as energy is only generated when the kite is in wind harvesting mode, typically flown dynamically with an angle attack to create high lift of the kite and therefore a high traction force on the kite connecting lines connected to a generator for converting the traction force on the one or more kite connecting lines into electrical energy. When retracting the kite back to the ground station no electricity is generated.

As a consequence, these systems are therefore not suitable to propel a ship, which, for proper navigation, needs to rely on a continuously operating propulsion system.

Other known wind harvesting systems, mounted on a ship, and which may drive generators located at the kite itself ("airborne wind turbines" or fly-generating systems), and which fly substantially in a circular or an eight-shaped path, have the disadvantage that they propel the ship mainly only in a downwind direction. This effect being that the ship can invariably only navigate on limited courses, relative to the wind direction, and over time it will eventually be pulled downwind. To get back to an upwind location, the ship will have to consume energy, rather than generate energy, which decreases the overall efficiency of the system.

Further, making use of airborne wind turbines generally has as least the further disadvantage that the kite, with its attached structures, is heavy. This means, that one needs to apply lightweight construction of the airborne structures and the kite has a disadvantage in light winds. US 4,335,093, US 20090189396, US 20100001534 and US 9,828,078 describe permanently submersed watercraft mounted rotors and generators to convert the mechanical kite traction energy into electrical energy (also called "energy ships"). Whilst this is generally feasible the disadvantages associated with the usage of such hydrokinetic turbines are multiple. Firstly, for large-scale and highly effective energy production systems, the required rotors have to be relatively big, and difficult and expensive to manufacture. Secondly, the drag force and hydrodynamic efficiency of these under-water turbines will reduce the overall efficiency of the kite-driven wind harvesting system and therefore its economic output in electricity or electrofuels. Thirdly, this reduction in efficiency will in particular be the case when the desire for reduced sizes of the rotors demand higher harvesting velocities of the ship, as these need to be able to absorb and capture most of the energy the kite harvests from the wind. Fourthly, under-water turbines limit the usefulness of the watercraft, as submersed turbines can cause problems in shallow water. Fifthly, the under-water hydrokinetic turbines can limit the maneuverability of the ship in general and/or its ability to sail close-hauled to navigate up-wind. Sixthly, submersed turbines can require an increased effort for maintenance and sealing and can collide with objects or animals in the sea.

CN 101240778 A1 discloses methods for generating electricity using a kite wherein the kite windward angle is changed by a control device on the ground. When the kite surface is perpendicular to an airflow, the kite produces maximum pull by wind resistance and the kite generates electricity by actuating a generator with the kite lines. The generator also acts as an electric motor which draws the kite back in towards the motor.

ES 2608254 A1 discloses an electric generator powered by a minimum of four delta-type inflatable kites where when the wind hits them, they move in a certain direction pulling a chain that is on an oval rail forming a continuous and cyclic track. This chain moves in turn through a chain-pinion system to a crown that is coupled to an electric generator producing electrical energy suitable for consumption.

DE 102008024414 A1 discloses a device comprising a kite cluster to drive a wagon. The wind energy is converted into electrical energy by a generator which is placed in the wagon. The track of the wagon is stabilized by a rail, where a cog wheel transmits the mechanical energy to the generator. The cog wheel is engaged in a toothed rack which is mounted on a track bed.

Further, the invention reduces potential problems associated with torque and heeling, when inducing the tractive force of a kite onto a watercraft.

The applicant having considered the above proposes the invention described hereunder.

### Definitions

For the purpose of this specification the term "kite" shall mean to include a wing, manufactured from a rigid, semi-rigid, soft or inflatable structure, a sail, an airfoil, a wing profile, a glider, a paraglider, a parakite, a tethered aircraft, or any other similar wind engagement element connected to the ground by a line or by a plurality of lines, and capable of being lifted aerodynamically by the wind. The singular version "kite" shall also imply a plurality of such kites, and can be suspended on the lines in sequence or in parallel.

For the purpose of this specification the phrase "kite base station " shall mean to include any kite control system or kite control device used in combination or individually, for adjusting the length of its one or more kite connecting lines extending between the kite base station and its kite for manipulating the orientation of the kite in flight, including reels, winches, sheaves mounted to kite line deflectors, linear cylinders, toothed belts, chains guided by toothed wheels, or the like.

The kite base station can directly include the kite control system and / or kite control device. The kite control system or kite control device can also be located away from the kite base station, for example mounted onto and operatively connected to the kite connecting lines (also sometimes called a "kite control unit" or a "kite steering gondola") and can include any system or device for adjusting control elements at the kite itself, such as ailerons, rudders or elevators, or moving tether attachment points.

The kite base station may be fixed on the ground, on a vehicle, on a swimming platform, or on or below the deck of a watercraft and from it extend any form of kite connecting line, cable(s) or rope(s). In case one uses several kites, these may be tethered in sequence or in parallel to the kite base station.

For the purpose of this specification the terms continuous or non-cyclical power production shall mean to include quasi-continuous or quasi-non-cyclical, in the sense that there may be very short interruptions or discontinuities during power production, which, however are not substantial and which do not limit the usefulness of the invention. The power production is, for all practical intents and purposes, continuous and non-cyclical and equivalent to this feature, in the strict sense of these terms. Short interruptions of watercraft propulsion will be mitigated by inertia of the watercraft itself, and short interruption of power generation will be mitigated by buffer batteries, capacitators or other means to store electricity very short-term with high efficiency.

For the purpose of this specification referral to a "kite connecting line" shall mean to include a singular kite connecting lines, as well as a plurality of kite connecting lines.

### Summary of invention

According to the invention there is provided a watercraft comprising a kite driven power generating system, the kite driven power generating system including:
at least two kite base stations which are mounted displaceably about the watercraft;
each kite base station configured to control at least one kite connected thereto;
each kite base station including means for adjusting the length of at least one kite connecting line, and, a generator for converting tractive force exerted on the at least one kite connecting line into electrical energy;
an orientation subsystem for displacing each of the at least two kite base stations between an operative, and, an inoperative location, respectively;
the operative and inoperative location being distinct locations defined about the watercraft;
wherein each of the at least two kite base stations is further configured to, when located in the operative location, orientate its kite in a wind harvesting and energy generating mode to exert a tractive force on the at least one kite connecting line sufficient to reel out the at least one kite connecting line to generate energy as it is reeled out, and to, when located in the inoperative location, orientate its kite in a kite retraction mode for exerting a relatively less tractive force on the at least one kite connecting line.The at least one operative location may be located about a longitudinal axis of the watercraft and located towards the bow of the watercraft, in relation to the at least one inoperative location.

The at least one operative location may further be located leeward the watercraft's longitudinal axis.

At least one of the plurality of kite base stations may be rotatably mounted to the watercraft.

The position of the at least one operative location and/or the connection of the kite base station at the at least one operative location may be defined so as to allow the kite base station to, when in use, counter torque and heeling effect on the watercraft.

The at least one operative location may be defined larboard the watercraft.

The at least one operative location may be defined starboard the watercraft.

At least one of the plurality of kite base stations may be pivotally connected about a pivot point to the watercraft, pivoting about a horizontal axis thereof. In this form of the invention the kite base station may be configured to extend upward away from the watercraft.

The pivot point may be located inside the watercraft substantially in register with and/or even below the surface of the body of water surrounding the watercraft.

The pivotally connected kite base station may also be rotatably connected to the watercraft so as to define a rotatable and pivoting kite base station, rotating about a vertical axis thereof.

The rotatable and pivoting kite base station may include its own securing device for securing the kite base station in a desired orientation relative the watercraft.

The desired orientation may result in the kite base station having a less torque and /or heeling effect on the watercraft.

The securing device may include any one or more of the group consisting of ropes, cables, rope and pully block system, or the like.

The orientation subsystem may be configured to alternate and/or rotate each of the plurality of kite base stations between the at least one operative, and, the at least one inoperative location, respectively, so as to yield a substantial continuous supply of mechanical tractive force and conversion of mechanical tractive force into storable energy.

The orientation subsystem may include a computer.

The orientation subsystem may include a track for guiding displacement of each of the plurality of kite base stations between the at least one operative, and, the at least one inoperative location, respectively.

The orientation subsystem may be configured to rotate at least two of the plurality of kite base stations about fixed locations defined about the track. The fixed locations may include the at least one operative and / or at least one inoperative location.

The orientation subsystem may be configured to rotate at least two of the plurality of kite base stations around a common vertical axis.

In one form of the invention the orientation subsystem may include a rotatable base having a pair of kite base stations mounted thereon and opposed one another, so as to when rotating the rotatable base, each of the pair of the kite base stations is displaced between the at least one operative, and, at least one inoperative locations, relative the watercraft.

In wind harvesting and / or operative mode when located in the at least one operative location, the kite base station may be configured to align and / or orientate its kite, by configuring its kite control system and / or kite control device, having an increased angle of attack compared to when the kite base station is located in the at least one inoperative location.

In wind harvesting and energy generating mode, when located in the at least one operative location, the kite base station may be configured to align its kite connecting lines, through its kite control system and / or kite control device so as to orientate and/or fly its corresponding kite to exert a high mechanical tractive force on its kite connecting lines. The kite connecting lines are further operably connected to a generator located at the kite base station which is configured to convert the mechanical tractive force exerted onto the kite connecting lines into storable energy.

In kite retraction mode, when located in the least one inoperative location, the kite base station may be configured to align and /or orientate its kite connecting lines through its kite control system and / or kite control device so as to orientate its kite having a decreased angle of attack and slower flight, and thereby a decreased mechanical tractive force compared to when the kite base station is located in the at least one operative location, so as to allow the kite base station to spend less energy retracting the kite back to the kite base station, compared to the energy generated when in wind harvesting and energy generating mode and located in the at least one operative location.

In use, the kite base station when displaced to the at least one operative location will have its kite initially located near the kite base station and by flying the kite in a wind harvesting orientation having an increased angle of attack, will extract the kite connecting line from the kite base station, the extraction of its one or more kite connecting lines causing rotation of one or more reels and / or winches which rotational energy is converted through a generator operably connected to the one or more reels and /or winches into electrical and / or storable energy. The one or more reels and / or winches may be operably connected to the generator. The one or more reels and / or winches may also include the generator.

After the kite having extracted its one or more kite connecting lines to their full length, and/or at a predetermined length, the orientation subsystem will displace the kite base station to the at least one inoperative location, where the kite base station, through adjusting the orientation of its kite connecting lines, will adjust its corresponding kite in a non-wind attacking mode and static or slow flight for enabling the kite base station to, when retracting the kite, expending less energy than the amount of energy generated when located in the at least one operative location.

Simultaneously, as the orientation subsystem displace the kite base station from the at least one operative towards the at least one inoperative location, for allowing the kite base station to retract its one or more kite connecting lines and thereby the kite, another kite base station will be displaced from the inoperative towards the operative location, orientate its kite in a wind harvesting mode with a maximum angle of attack and/or the kite flown with maximum speed, thereby reeling out the kite connecting line and generating electrical and / or storable energy.

This rotation or alternation of the plurality of kite base stations between the at least one operative, and, at least one inoperative location, respectively, yields a non-cyclical and / or continuous harvesting of wind energy.

The at least one operative, and at least one inoperative location may also be in the form of multiple operative, and multiple inoperative locations, respectively.

The displacement and / or rotation of the kite base stations between the at least one operative and at least one inoperative location may define a straight path.

The displacement and / or rotation of the kite base stations between the at least one operative and at least one inoperative location may be co-axially.

The displacement and / or rotation of the kite base stations between the at least one operative and at least one inoperative location may define a curved path.

The kite driven watercraft power generating system may further include a water turbine subsystem which may be displaceably mounted about the watercraft to be operable between an operative mode when submersed in water, and inoperative mode, when lifted out of the water, respectively.

The water turbine subsystem in turn may include a water turbine auxiliary system which may be pivotally mounted about the watercraft. The water turbine auxiliary system may be mounted upstream the water turbine subsystem.

The kite driven watercraft power generating system may further include energy storage means for storing the storable energy generated from harvested wind energy.

The energy storage means may include any one or more of the group consisting of a tank, an electrolyser, a hydrogen generator, a hydrogen storage, a compression facility, a liquefaction facility, a methanation facility, a carbon dioxide generator, a carbon dioxide storage, carbon dioxide harvester, a methane compression facility, a methane liquefaction facility, methanol generator, Fischer Tropsch reactor, and ammonia reactor.

The tanks which contain the stored energy may be located about the centre of the watercraft, whilst the other means and facilities to convert the energy into storable form may be located far from the centre of the watercraft, to maintain trim and balance for the watercraft independent of the filling level of the tanks.

### Brief description of the invention

The invention is now described by way of example with reference to the accompanying drawings.

In the drawings:
Figures 1 to 7 are schematic illustrations of different commonly known configurations of kite base stations including their respective kite control devices for controlling a kite;
Figure 8 is a schematic illustrating possible positioning of the at least one operative and the at least one inoperative location defined about a watercraft when employing two kite base stations;
Figure 9 is a top view schematic illustration of the possible configuration shown in figure 8 and further illustrating the path of rotation when employing two kite base stations alternating between the at least one operative, and, the at least one inoperative location, respectively;
Figure 10 is a schematic illustrating a further possible configuration of alternation when employing two kite base stations alternating between the at least one operative and at least inoperative locations, respectively, employing guided tracks shown in dotted lines;
Figure 11 is a schematic illustrating possible outlay on the watercraft when employing multiple operative locations, in order to counter torque and heeling effect of the kite base station on the watercraft;
Figure 12 is a schematic of a further embodiment of the orientation subsystem wherein the kite base stations are displaced about the watercraft about rails or tracks, indicated by dotted lines, and illustrating the outlay when employing multiple operative locations about the watercraft to counter torque and heeling effect;
Figure 13 is a schematic illustration of an embodiment of the orientation subsystem having a pair of kite base stations in locations opposing one another along a common axis;
Figure 14 is a schematic when employing two kite base stations located in the at least one operative, and at least one inoperative location on the watercraft, respectively, the schematic further illustrating the force vectors exerted by the kite in the operative location when the watercraft is sailing on beam reach course / close to the wind;
Figure 15 is a schematic of the watercraft illustrated in figure 14, the schematic further illustrating the force vectors exerted by the kite in the operative location when sailing broad reach course / downwind;
Figure 16 is a schematic illustrating the outlay when having two operative locations and one inoperative location defined about a watercraft, and when employing three kite base stations, the outlay of the operative locations to counter torque and / or heeling effect of the kite on the watercraft;
Figure 17 is a schematic illustrating the orientations of the respective kites of the three kite base stations, as depicted in figure 16;
Figures 18 and 19 are schematic illustrations of the kite base station when located in the at least one operative location, the location of the geometric centre of the watercraft hull and resultant torque exerted on the watercraft;
Figure 20 is a schematic illustrating the positioning of the at least one operative location towards the side of the watercraft to counter the heeling effect on the watercraft;
Figure 21 is a schematic illustrating a second embodiment of the kite base station being pivotally connected to the watercraft to illustrate the counter of torque and heeling effect on the watercraft;
Figure 22 is a schematic of the kite base station embodiment shown in figure 21, when in use;
Figure 23 is a schematic of a third embodiment of the kite base station;
Figure 24 is a schematic illustrating the water turbine subsystem, immersed in water;
Figure 25 is a schematic illustration of the water turbine subsystem shown in figure 24 when lifted out of water;
Figures 26 and 27 are schematics illustrating possible positions of the water turbine auxiliary system;
Figure 28 is a schematic illustrating the preferred locations of the energy storage means in the watercraft for storing generated energy;
Figure 29 is a schematic of a multi hulled watercraft, each hull having an operative location defined for accommodating a kite control system in operative mode, in accordance with the invention.

### Detailed description of the invention

Referring now to the drawings, the kite driven watercraft power generating system, in accordance with the invention, is generally indicated by reference numeral 10.

Generally, in accordance with an embodiment of the invention there is provided a kite driven watercraft power generating system 10 which includes at least one operative location 12 defined on the watercraft 14, at least one inoperative location 16 defined on the watercraft 14, a plurality of kite base stations 18.1 and 18.2, mounted displaceably onto the watercraft, and an orientation subsystem for displacing each of the plurality of kite base stations 18.1 and 18.2 in a step by step, and/or in a simultaneous translational manner between the at least one operative 12, and at least one inoperative 16 locations, respectively, wherein each of the plurality of kite base stations 18.1 and 18.2 is further configured to orientate its respective kite 22.1 and 22.2 in a wind harvesting and energy generating mode when located in the at least one operative location 12, and, in a kite retraction mode, when located in the at least one inoperative location 16, respectively.

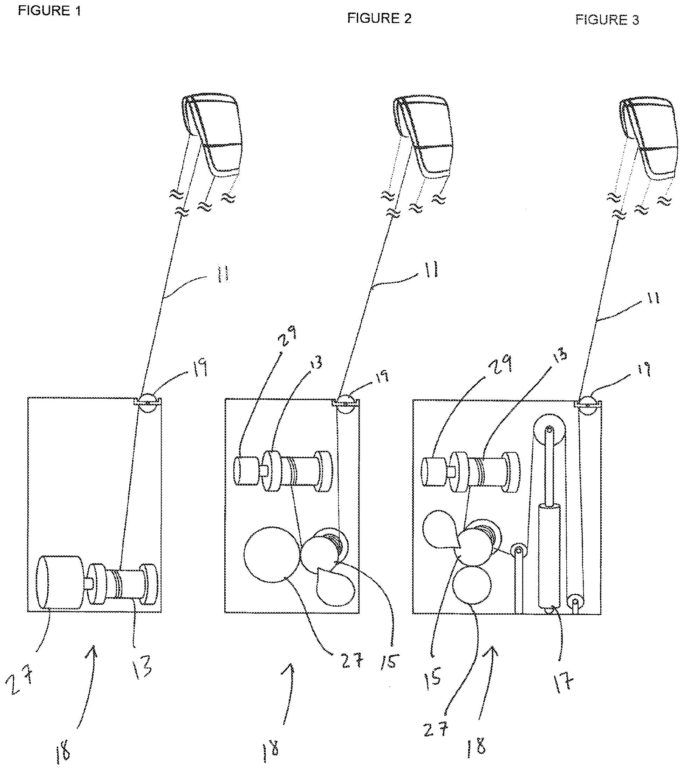

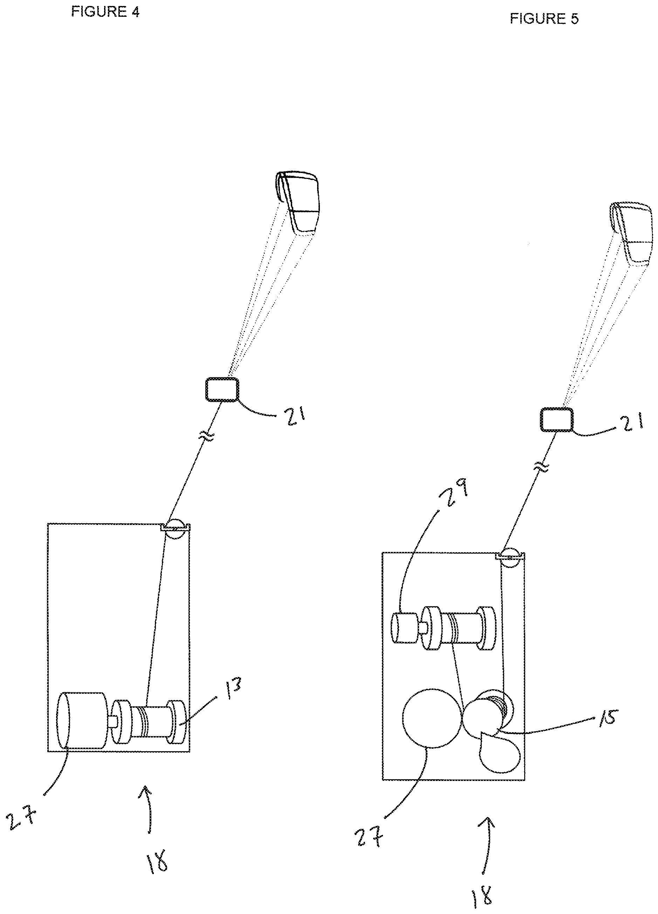

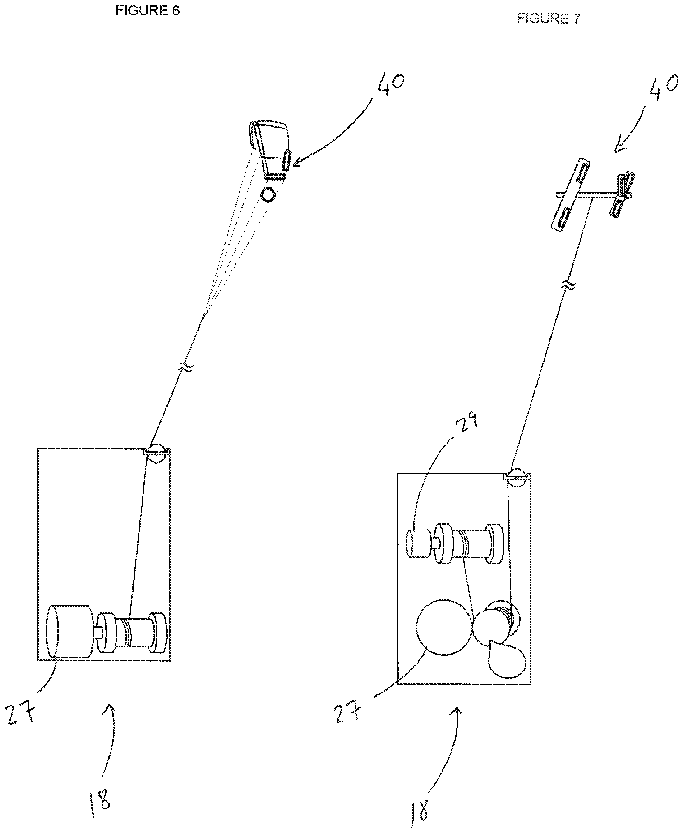

Figures 1 to 7 illustrate different configurations of the kite base station 18 which can be used, their respective kite control systems and / or kite control devices included for manipulating the orientation of its kite in flight. Typically, these types of kite base stations 18 includes, through their kite control systems and / or kite control devices, means for adjusting the length of the kite connecting line 11 and generally includes any one or more of reels, 13, winches 15, deflectors 17, pulleys 19 and actuators 21. Reels 13 and / or winches 15 will typically include a generator 27 to convert rotational energy into electrical energy, when the reel 13 or winch 15 is in motion, driven by the traction force on the kite connecting line 11. Reels 13 and / or winches 15 can also be operably connected to a motor 29 which is configured to reel in the kite connecting line 11. Generator 27 can be configured to work in reverse mode as a motor 29. In this case the generator 27 and the motor 29 will be the same entity. Generator 27 can, however, be separate from motor 29. The kite connecting line 11 typically functions as traction and steering lines. Although only one kite connecting line 11 is depicted for steering of kites 22 of the kind sometimes can necessitate the use of multiple kite connecting lines. The kite 22 can alternatively also be steered by applying rudders, elevators, ailerons or moving tether attachment points 40 and the like.

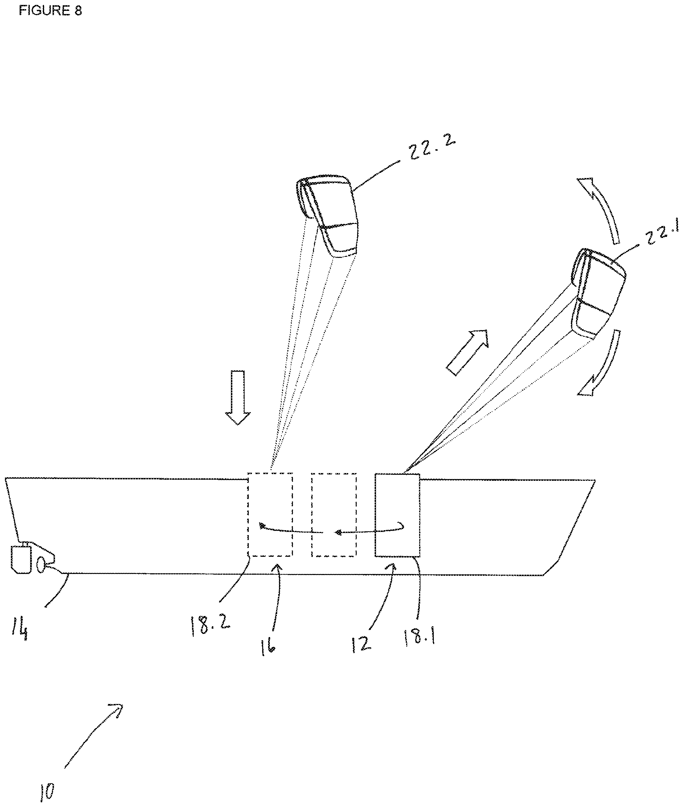

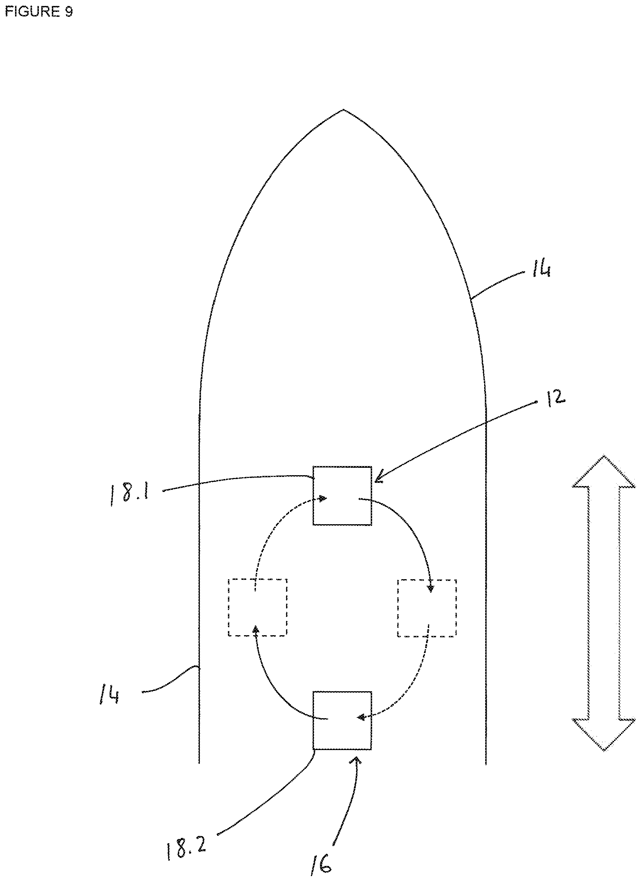

Figure 8 is a schematic side view, and figure 9 a top plan view, illustrating the at least one operative location 12 located generally about a longitudinal axis of the watercraft 14, and preferably substantially forward the at least one inoperative location 16. It is preferably located towards the bow of the watercraft 14, so as to when simultaneously in flight, the watercraft 14 can accommodate each of their kites 22.1 and 22.2 of the corresponding kite base stations 18.1 and 18.2.

Figure 9 more clearly depicts the path of rotation when employing two kite base stations 18.1 and 18.2 respectively, between one operative location 12 and one inoperative location 16. Simultaneously, as kite base station 18.1 located at operative location 12 is displaced clockwise to a right/starboard position, and from there to inoperative location 16, kite base station 18.2 is displaced from inoperative location 16 clockwise towards a left/larboard position, and then towards operative location 12. The kite base station 18.1 and 18.2, when located in the operative location 12, controls the powered kite, which reels out the kite connecting line and drives the generator 27. The kite base station 18.1 and 18.2, when located in the inoperative location 16, will control the de-powered kite which will be reeled back in towards the kite base station so as to be reeled-out again when located in the operative location 12. The movement between the operative 12 and inoperative locations 16, respectively, as depicted in this embodiment, follows a substantial circular path.

Depending on the amount of kite base stations 18 and layout of the watercraft 14 the orientation subsystem will be configured to alternate and/or rotate each of the plurality of kite base stations 18 between the operative 12 and inoperative locations 16, respectively, so as to yield a substantial continuous supply of mechanical tractive force and conversion of mechanical tractive force into storable energy. The layout and surface area will typically determine the amount of kite base stations 18 to be employed, and also the pathway to be followed between the operative 12 and inoperative locations 16 to allow sufficient time to retract the kite and to orientate it for reeling out again when in the operative location so as to yield a substantial continuous supply of harvested wind energy.

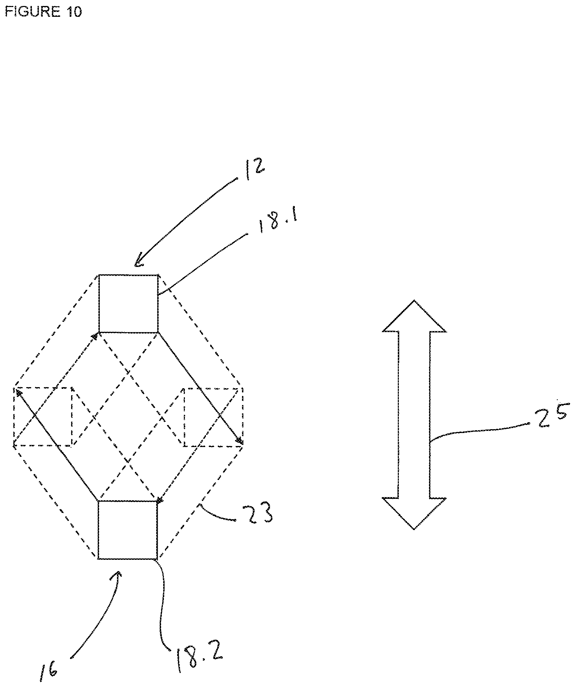

Figure 10 illustrates the orientation subsystem including a track 23 for guiding displacement of each of the plurality of kite base stations 18.1 and 18.2, shown in figures 8 and 9, along a guided pathway between the operative 12 and inoperative location 16, the alternating change forward and backward the watercraft indicated by arrow 25.

Figure 10 also shows that the orientation subsystem can be configured to rotate at least two of the plurality of kite base stations 18.1 and 181.2 about fixed locations defined about the track, intermediate the operative 12 and inoperative locations 16.

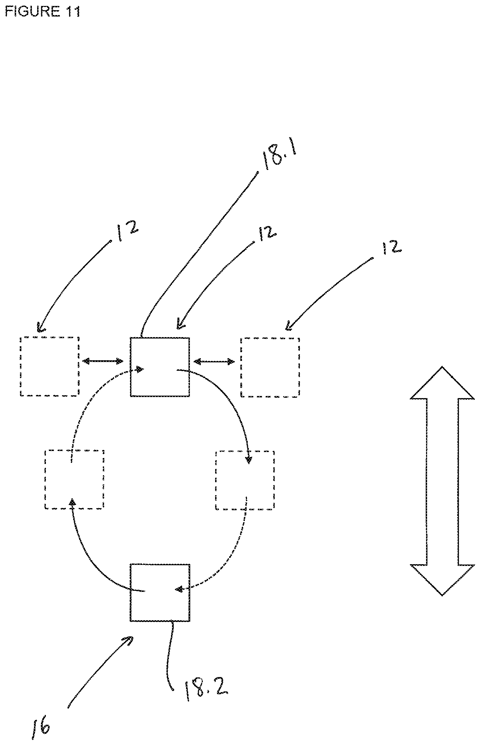

Figure 11 further illustrates the possible locations of kite base stations 18.1 and 18.2 on the watercraft. The operative locations 12 can also be located or defined sideways, towards a more starboard position or towards a more larboard position, to counteraction torque and heeling. If the wind blows from the left, the operative location 12 can be moved towards starboard (to the right), which is leeward. When in this location, the kite base station 18.1 will have its kite orientated in a wind harvesting mode having an increased angle of attack and typically exerts a force forward, to the right, and upwards, will lift the leeward side of the ship up to counter the torque created by the kite's force to the right, and therefore heeling.

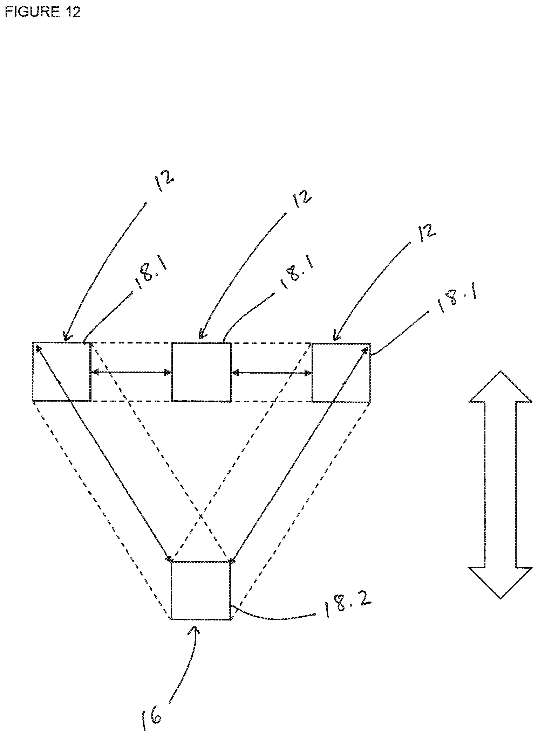

Figure 12 shows the incorporation of guided tracks 23, as depicted in figure 10 for securing the kite base station 18.1 in the operative 12 and inoperative location 16.

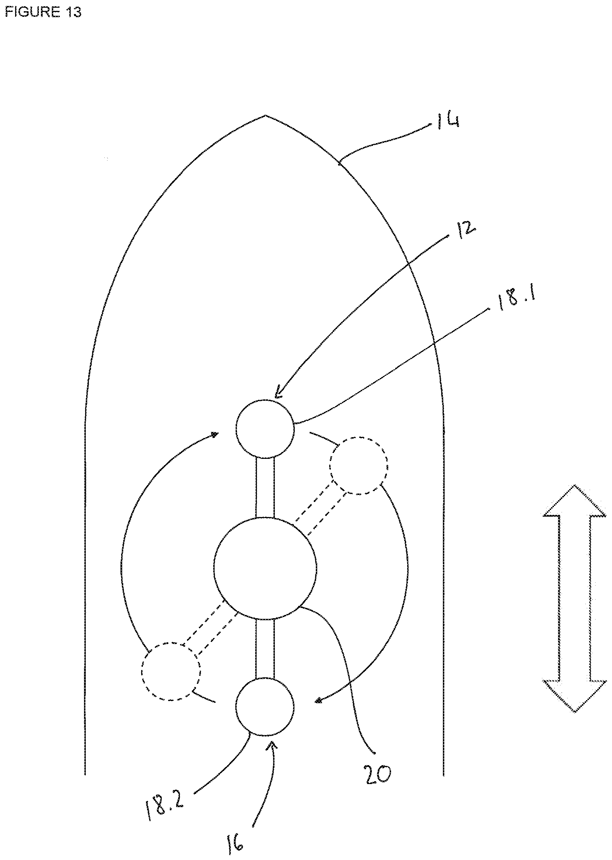

Figure 13 shows one embodiment of the orientation subsystem which includes a rotatable base 20 having a pair of kite base stations 18.1 and 18.2 mounted thereon and opposed one another, so as to when rotating the rotatable base 20, the pair of the kite base stations 18.1 and 18.2 is displaced between the operative 12 and inoperative locations 16 relative the watercraft 14. The preferred operative location 12 may be slightly to the side of the watercraft, to the left or to the right, depending on the wind direction, preferably on the leeward-side of the watercraft, to counter torque and heeling.

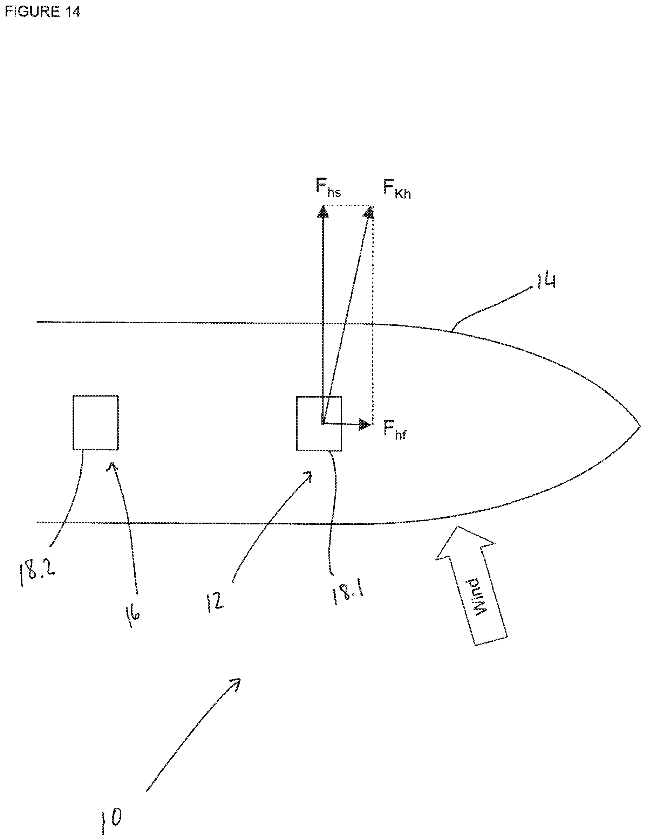

Figure 14 shows the kite base stations 18.1 and 18.2 when located in the operative 12 and inoperative locations 16, respectively. Kite base station 18.1 when located in the operative location 12 will have its kite orientated in a wind harvesting mode. The kite's horizontally oriented traction force vector F_{Kh} when located in operative location 12, can be divided into the components Fₕₛ (force horizontally sideward) and F_{hf} (force horizontally forward). The latter is the propulsion force, to propel the watercraft.

On a sailing beam reach course ("close to the wind") there is sufficient "dead force" perpendicular to the movement direction of the watercraft Fₕₛ, which can drive the generator to produce electricity. At the same time, there is a rather low propulsion force forward F_{hf}. This may be desirable, as it may mean that the watercraft is not propelled at a too fast a rate, and therefore not too much energy is lost through friction at the hull (the friction force at the watercraft's hull increases quadratic with the watercraft's velocity F = ½ rho *Aₛ *C_{F} * V_{Ship}²).

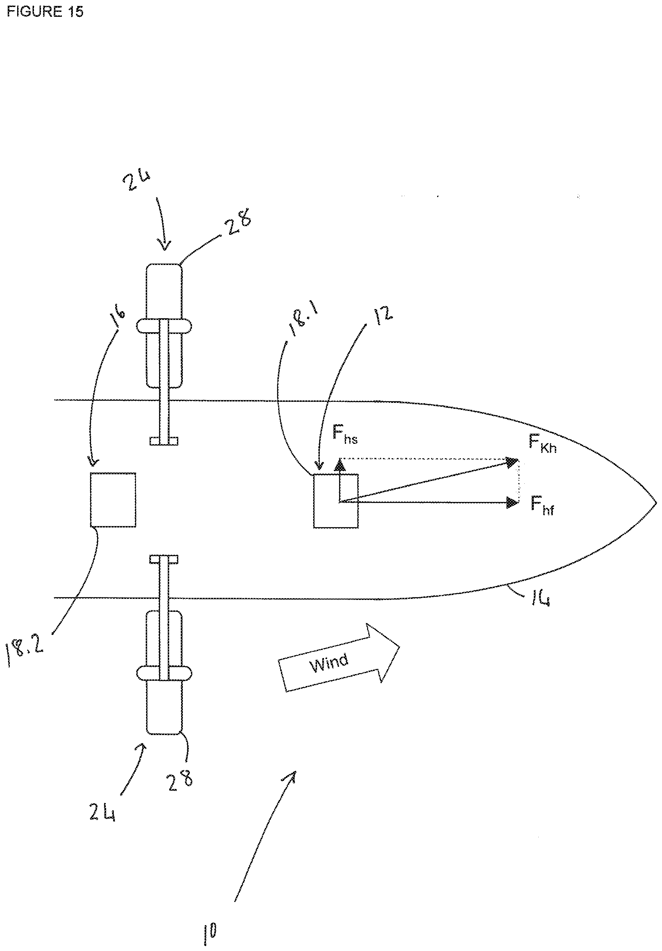

Figure 15 shows the watercraft depicted in figure 14 but with the wind from a different direction, on a rather downwind course (broad reach or "before the wind"), where most of the kite's force F_{Kh} is directed into the movement direction of the watercraft F_{hf}. At the same time, there is a rather low "dead force" perpendicular to the watercraft's longitudinal axis Fₕₛ. This means that the watercraft may become undesirably fast, and loses too much energy through friction at the hull.

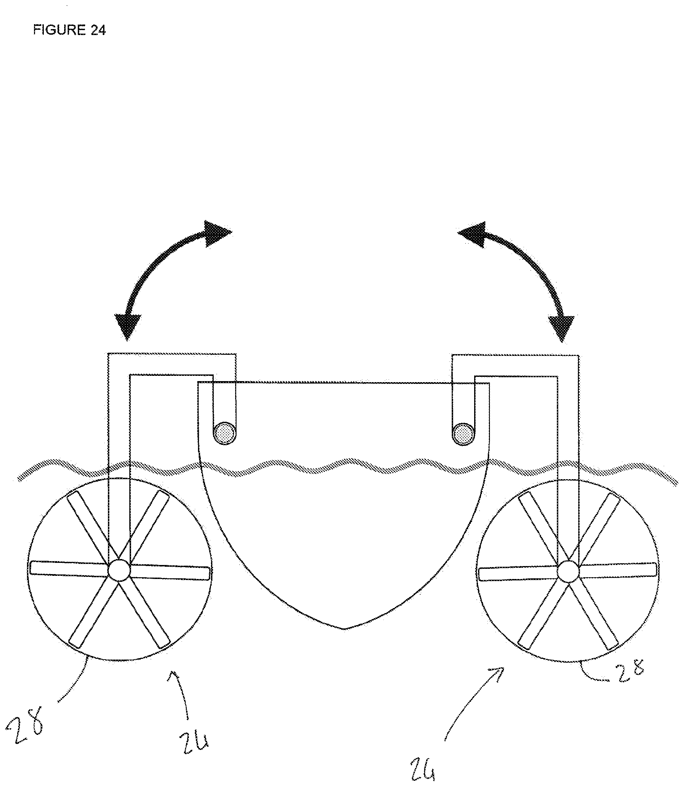

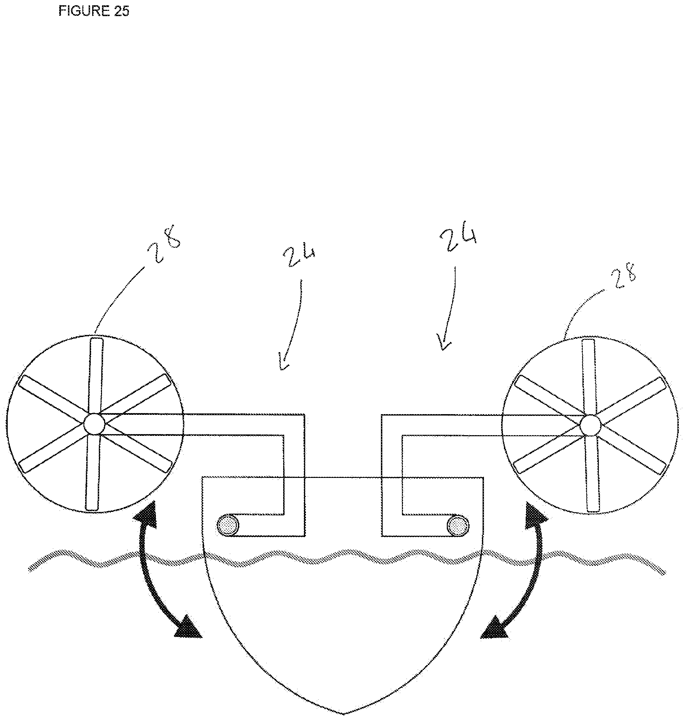

Therefore, some of the energy gained from F_{hf} may be collected by underwater, hydrokinetic flow turbines, which is described more in detail in figures 24 to 27.

The use of water turbines will slow down the watercraft, and reduce the power "lost" by friction at the hull (which is an exponential function of the watercraft's velocity). In this case, the watercraft would have at least one onboard generator, driven by the force of the kite connecting line, directly, for instance by unwinding the kite connecting line from a winch, while driving the winch and the generator, and at least one, for symmetrical reasons typically two, four or more, underwater turbine(s) 24, with underwater rotors, driving a turbine mounted generator or typically several generators, for instance located in the hub of the turbine. The turbine generator can also be on board of the watercraft. In this case the rotational energy of the underwater rotors can be transported onto the watercraft to the turbine generator, by any suitable means, such as toothed belts, chains or by hydraulic means. The underwater turbines can be pivotally suspended from the ship's hull(s), and lowered into the water at the point of need, for instance on a more downwind course, and pulled out of the water, if not needed or desired, e.g. on upwind courses.

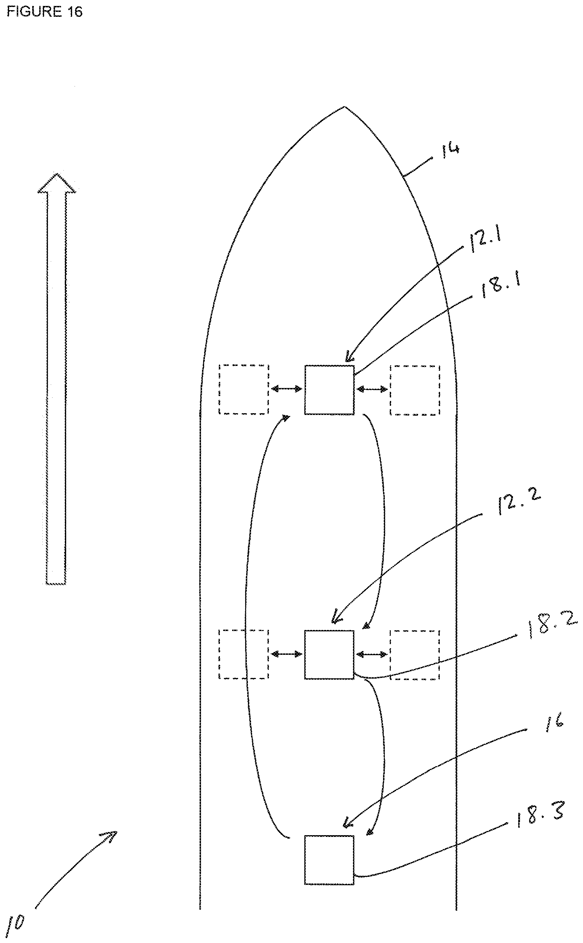

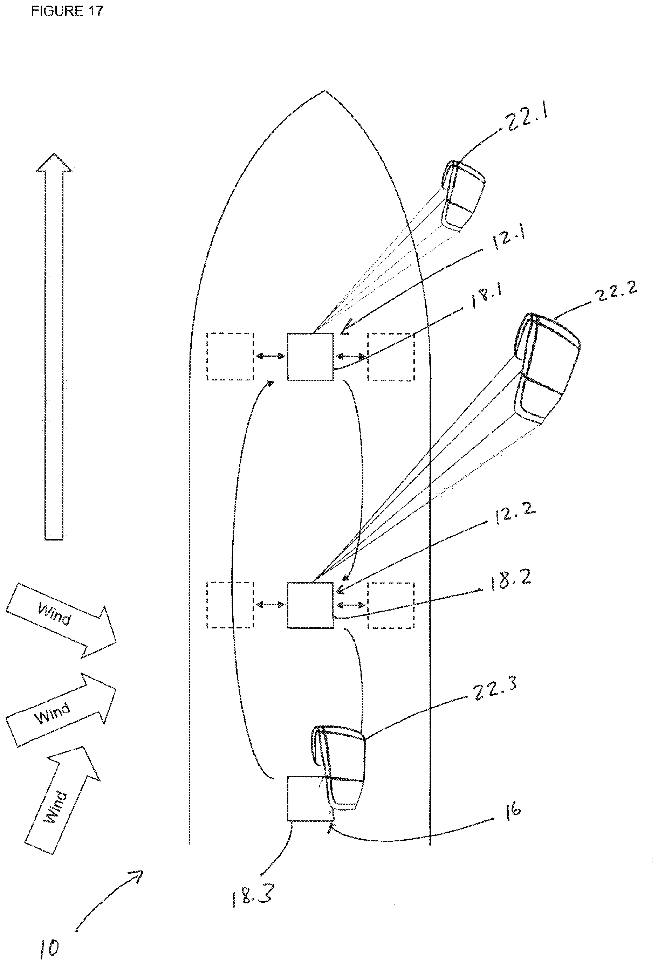

Turning to figures 16 and 17. Figures 16 and 17 depicts a possible layout when employing three kite base stations 18.1, 18.2 and 18.3, and when having two operative 12.1 and 12.2, and one inoperative location 16, defined about the watercraft 14.

The kite base stations 18.1 and 18.2 located in the operative locations 12.1 and 12.2, respectively, control their respective kites 22.1 and 22.2 in wind harvesting and energy generating mode, and the kite connecting line is reeled-out to drive the generator.

The kite base station 18.3 located in the inoperative location 16 controls the de-powered kite 22.3 in retraction mode, and the kite connecting lines are reeled-in by a motor.

The movements between the operative 12.1 and 12.2 and inoperative locations 16 may be by shifting them on a straight or curved path, step-by-step or simultaneously, and/or by rotating them simultaneously, from the operative location 12.1, 12.2 to the inoperative location 16, and vice versa.

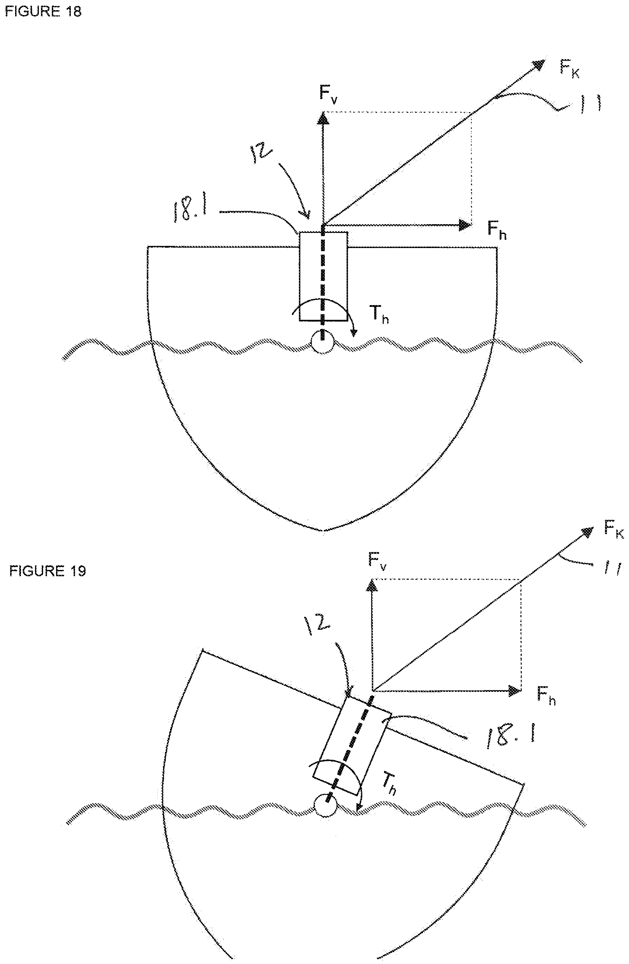

Figures 18 and 19 depicts a cross section through the hull of the watercraft to illustrate the effect of the kite base station 18.1 when located in the operative location 12 and having its kite orientated in wind harvesting mode having an increased angle of attack. The kite exerts its force F_{K} on its tether lines, with a component upwards Fᵥ and a component sideward Fₕ. The force vectors depict the horizontal component Fₕ and the vertical component Fᵥ of this traction force. The geometric center of the ship's hull is located somewhere around the height of the waterline. Therefore, the traction force of the kite and its sideward force component Fₕ will cause torque Tₕ around the geometric center and therefore cause heeling of the ship's hull.

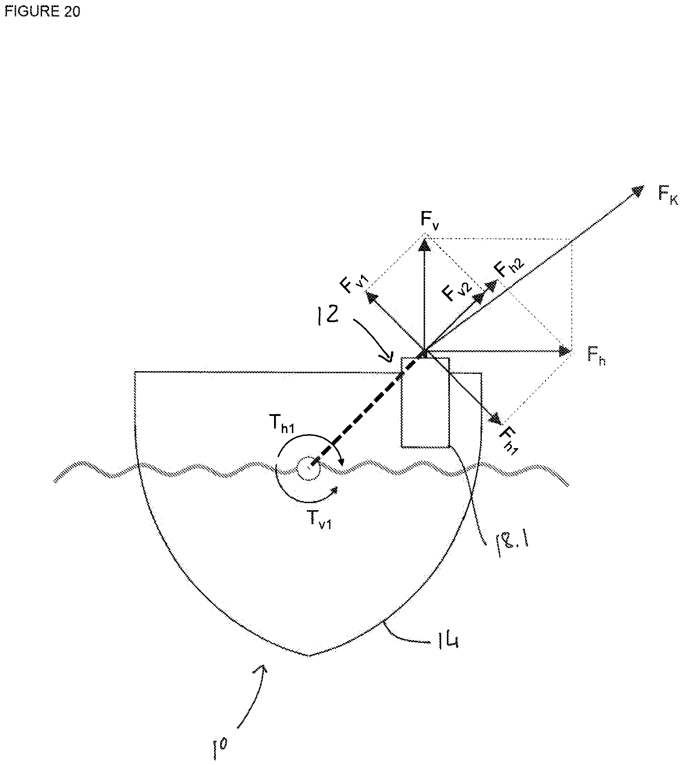

Figure 20 is a cross section through the watercraft's hull shown in figures 18 and 19, with the kite control system 18.1 located in the operative location 12 which is defined leeward the watercraft to counter the undesired heeling of the watercraft, shown in figures 18 and 19. The kite exerts its force F_{K} in an upwards component Fᵥ and a sideward component Fₕ, as depicted in figures 18 and 19. The force vectors depict these components.

The geometric center of the ship's hull is around the height of the waterline. Therefore, the traction force of the kite with its sideward force Fₕ can be divided into a force component Fₕ₁ perpendicular to the (fictious, dotted) line between the attachment points of the kite connecting lines and the geometric center of the ship's hull and the component orthogonal to it Fₕ₂. Force Fₕ₁ causes torque Tₕ₁ on the watercraft's hull clockwise.

The upwards force component Fᵥ can be divided into a force component Fᵥ₁ perpendicular to the (fictious, dotted) line between the attachment points of the kite connecting lines and the geometric center of the ship's hull and the component orthogonal to it Fᵥ₂. Force Fᵥ₁ causes torque Tᵥ₁ on the watercraft's hull counterclockwise. Both torques Tₕ₁ and Tᵥ₁ will work against each other, and cancel each other out, to a large extent. As a result, there is no or very little torque and undesired heeling of the ship's hull.

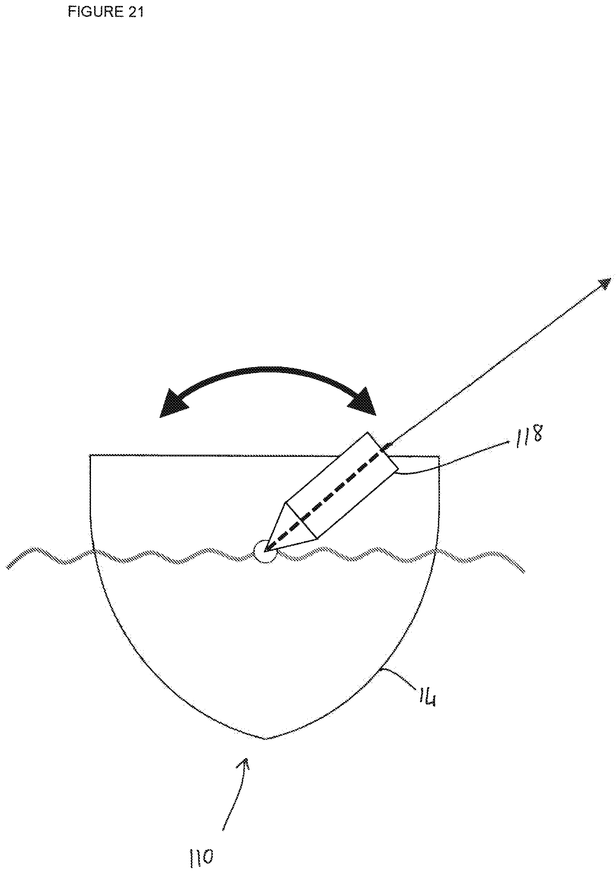

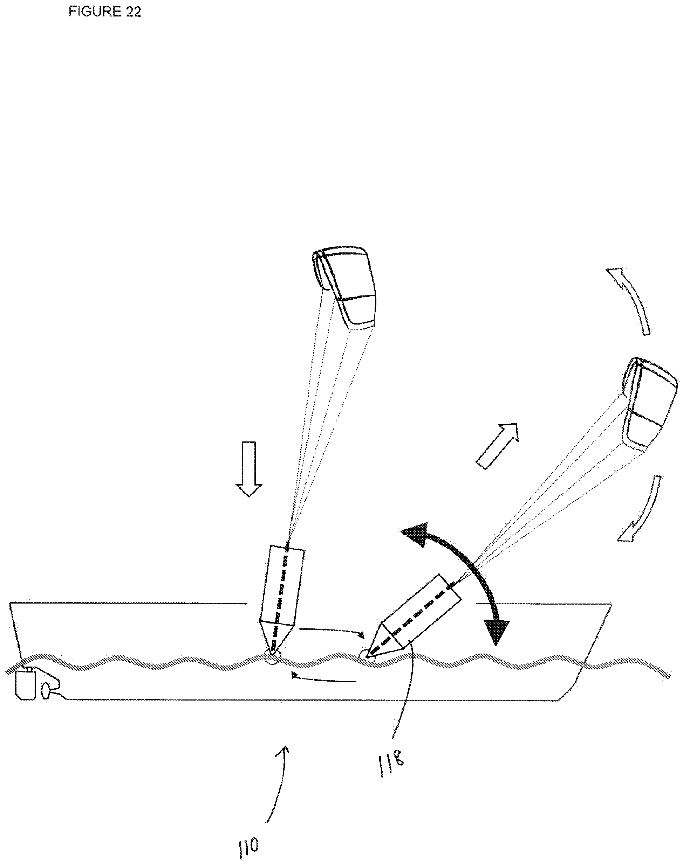

Another measure to counter torque and heeling, shown in figures 21 to 23, is by having the kite base station 118 pivotally connected to the watercraft 14. In this form of the invention 110 the kite base station 118 is configured to extend upward from the watercraft 14.

The kite base station 118 is pivotally anchored and suspended from a central point, close to the geometric center of the watercraft's hull, located around the height of the waterline or even below the waterline and about the longitudinal axis of the watercraft. The kite base station can pivot around this anchor point, sideways, to the left and to the right, around the longitudinal axis of the watercraft. The kite's traction force will move the kite base station 118 leeward, and therefore the kite will only exert minimal torque on the watercraft's hull, with the result of no or only minimal heeling.

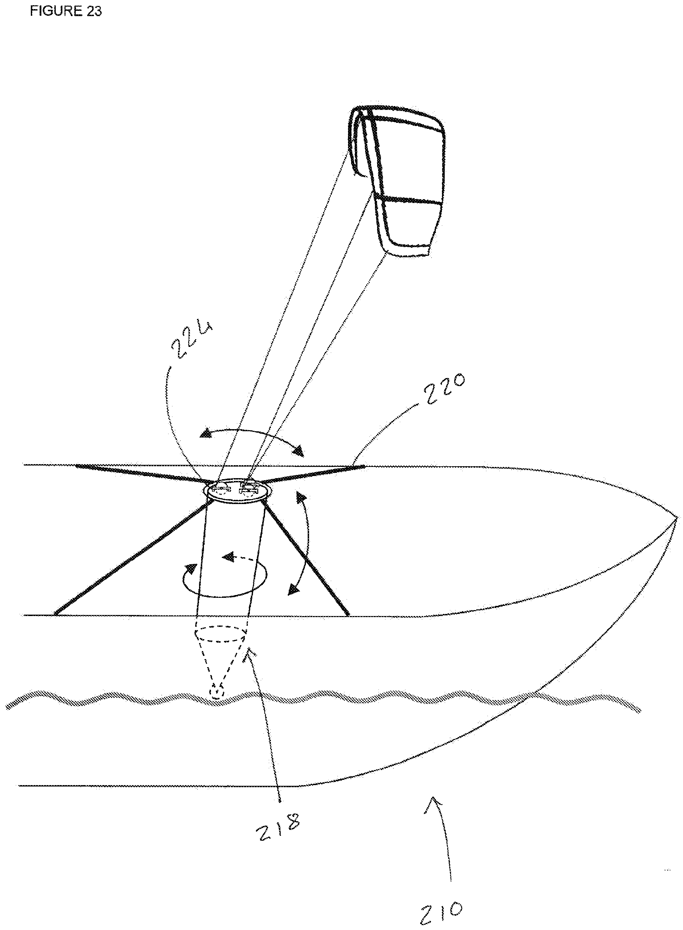

Figure 23 depicts another embodiment of 210 of the invention wherein the kite base station 218 is, in addition to being pivotable, also rotatable around its vertical axis, which can in use be effected by implementing a slewing bearing at its top end.

At its top-end, the kite base station 218 may be secured by incorporating a securing device 220 in the form of adjustable rods, bars, braces, or in the most flexible manner by ropes, to a slewing bearing 224 at its upper end, so that the upper end of the kite base station 218 can be fixed in the desired position, for instance aiming at the desired effect of minimal torque on the hull and heeling of the watercraft, for instance with a bias sideways of the longitudinal axis of the watercraft, towards a leeward position. The ropes can be in the form of a ropes-pulley-block system, with clamps to fix the rope, so that the upper end of the ground station can be conveniently fastened in the desired position.

In wind harvesting and / or operative mode when located in the operative location 12 the kite base station 18, 118 and 218, will be configured to align and / or orientate its kite having an increased angle of attack compared to when the kite base station 18, 118 and 218, is located in the inoperative location 16.

In wind harvesting and energy generating mode the kite base station 18, 118 and 218, will be configured to align its kite connecting lines so as to orientate and fly its corresponding kite to exert a high mechanical tractive force on its kite connecting line. The kite connecting line will further be operably connected to a generator located at the kite base station 18, 118 and 218, which is configured to convert the mechanical tractive force exerted onto the one or more kite connecting lines into storable energy.

In kite retraction mode the kite base station 18, 118 and 218, is configured to align and /or orientate its kite connecting lines so as to orientate its kite having a decreased angle of attack, flown typically static, and thereby a decreased mechanical tractive force compared to when the kite base station 18, 118 and 218 is located in the operative location 12 , so as to allow the kite control system to spend less energy retracting the kite back to the kite base station, compared to the energy generated when in wind harvesting and energy generating mode and located in the operative location.

In use, the kite base station 18, 118 and 218 when displaced to the operative location 12 will have its kite initially located near the kite control system 18, 118 and 218, and by flying the kite in a wind harvesting orientation having an increased angle of attack, and the kite flown with high speed, will extract the one or more kite connecting lines from the kite base station 18, 118 and 218, the extraction of the line causing rotation of one or more reels which rotational energy is converted into electrical and / or storable energy.

After the kite having extracted its one or more kite connecting lines at their full length, and/or at a predetermined length, the orientation subsystem will displace kite base station 18, 118 and 218, to the inoperative location 16, where the kite base station 18, 118 and 218, through orientation of its one or more kite connecting lines, will adjust its corresponding kite in a non-wind attacking mode for enabling the kite base station 18, 118 and 218, when retracting the kite, to expending less energy than the amount of energy generated when located in the operative location or when its kite is flown in wind harvesting and energy generating mode.

Simultaneously, as the orientation subsystem displaces the kite base station 18, 18 and 218 from the operative 12 towards the inoperative location 16, for allowing the kite base station 18, 118 and 218, to retract its one or more kite connecting lines and thereby the kite, another kite base station 18, 118 and 218 will be displaced from the inoperative 16 towards the operative 12 location, orientate its kite in a wind harvesting mode with a maximum flying speed and / or angle of attack thereby reeling out the one or more kite connecting lines and generating electrical and or storable energy.

This rotation or alternation of the plurality of kite base stations 18, 118 and 218, between the operative and inoperative locations yields a non-cyclical and / or continuous harvesting of wind energy.

Figures 24 to 27 illustrates the water turbine subsystem 24 which will preferably be displaceably mounted about the watercraft 14 to be operable between an operative mode when submersed in water, and inoperative mode, when lifted out of the water, respectively.

The turbines may either be suspended pivotally, so they can be swung below and above the water line (into and out of the water; sideways up/down, or forward/backward), or on a linear rail or guide, so they can be lowered into the water, downwards, or a combination thereof.

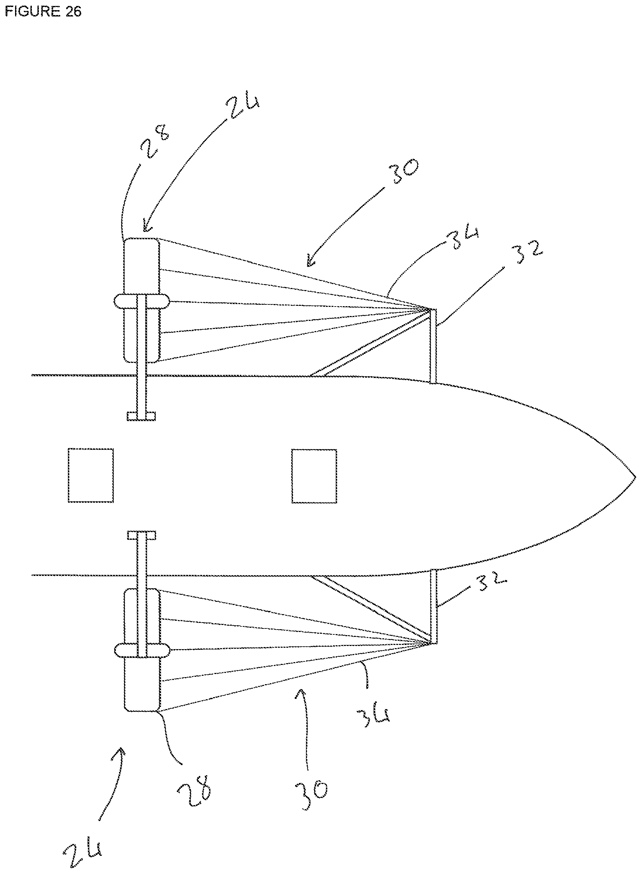

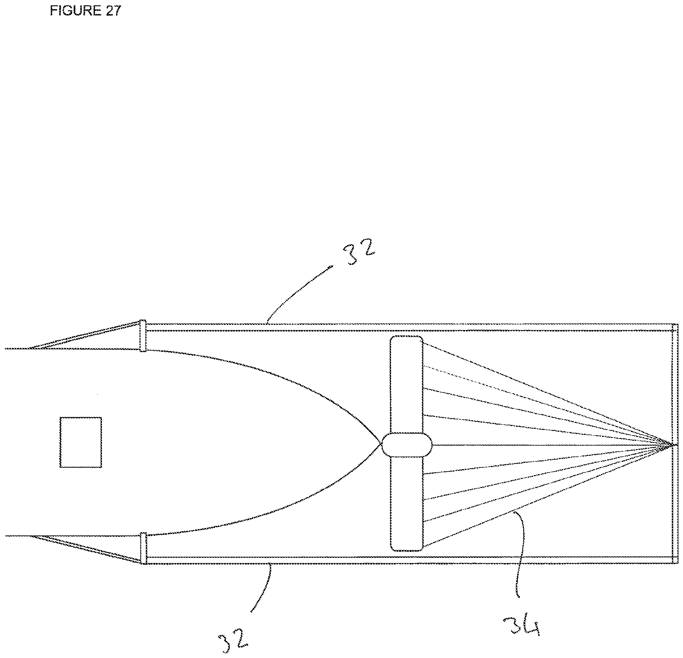

The water turbine subsystem 24 in turn can include a water turbine auxiliary system 30, see figures 26 and 27, which may be pivotally mounted about the watercraft 14. The water turbine auxiliary system 30 will be mounted upstream the water turbine subsystem 24 and consists of a support 32 at the front and cables 34 typically steel ropes, from the support 32 to the hub of the turbine 28 and/or to the shroud of the turbine 28. The water turbine auxiliary system 30 serves at least two purposes. Firstly, it can absorb most of the drag forces of the turbines 28 (which are directed towards the rear of the watercraft 14, when the watercraft is moving forward). Secondly, it can protect the turbine 28 and its rotors from debris or any objects floating in the water or even animals swimming in the water, and prevent damage. The water turbine auxiliary system 30 can also be suspended, for instance pivotally, so it can move with the turbine 28 from the deck of the watercraft 14, or from a position above the waterline, to a position below the waterline.

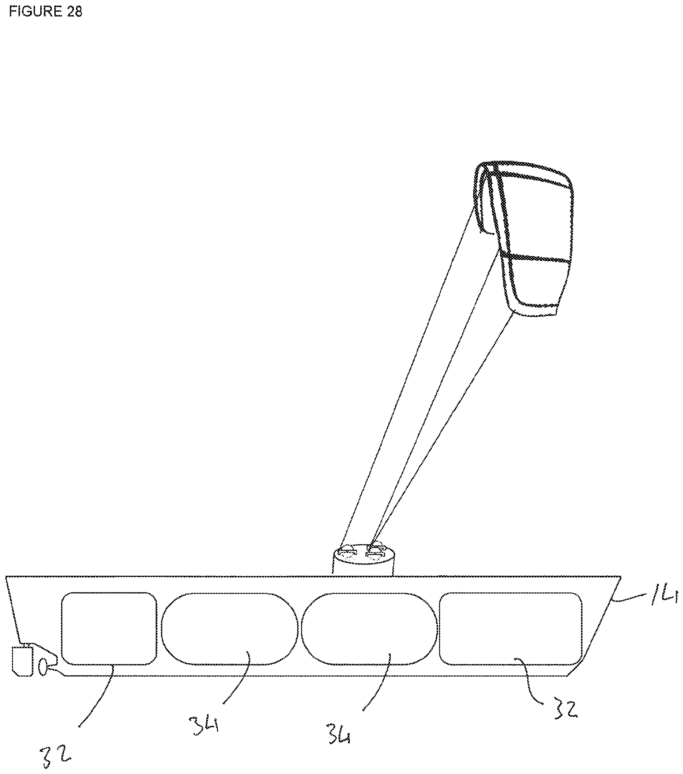

Turning to figure 28, the kite driven watercraft power generating system 10, 110 and 210, will further include energy conversion and storage means for storing the storable energy generated from harvested wind energy from the kite control system 18, 118 and 218, and its operatively connected generators, and from the generators, operatively connected to the rotor blades of turbines 28.

The energy storage means can include any one or more of the group consisting of sea water reverse osmosis (SWRO), water treatment, an electrolyser, a hydrogen generator, a hydrogen storage, a hydrogen compression facility, a hydrogen liquefaction facility, a methanation facility, a carbon dioxide generator, a carbon dioxide storage, carbon dioxide harvester, a methane compressor, a methane liquefaction facility, methanol generator, Fischer Tropsch reactor, and ammonia reactor.

These energy conversion and storage means will typically be located inside the watercraft, shown in figure 28.

The storage means can include a fuel tank 34 or several fuel tanks in a more central position of the watercraft 14 and energy conversion facilities 32 located towards the front and the back of the watercraft 14.

The energy conversion facilities are typically located towards the front and the back of the watercraft 14, whilst the energy storage facilities (fuel tanks) are typically located in a more central position of the watercraft 14. The latter positioning is important, because these tanks vary in weight, throughout the harvesting journey of the watercraft 14. By positioning the tanks centrally, in relation to the other facilities, which are located more towards the front and rear of the watercraft 14, the watercraft will keep its balance and trim throughout the journey, independent of the filling level of these fuel tanks.

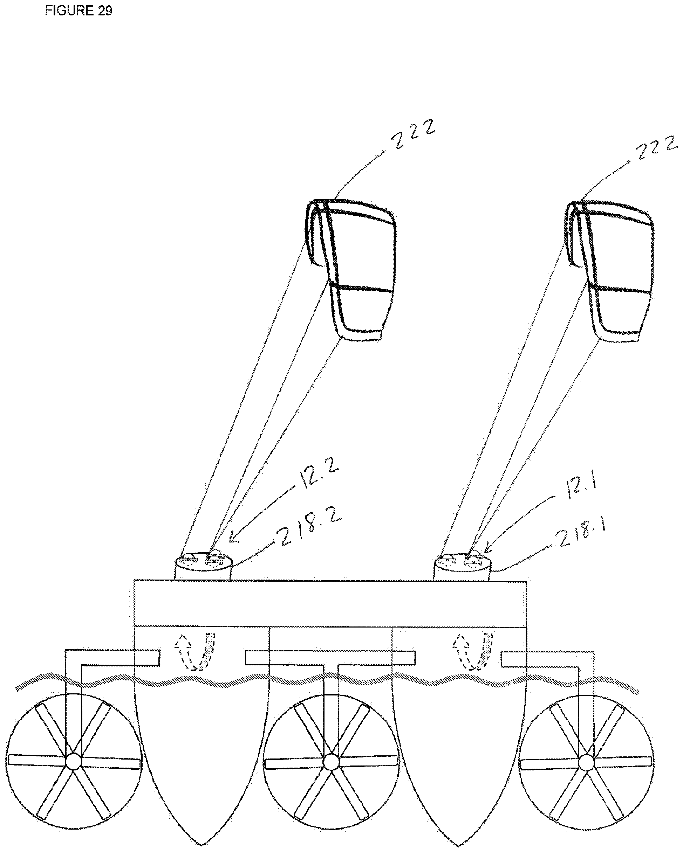

Figure 29 depicts a watercraft 14 having two hulls to accommodate two operative locations 12.1 and 12.2, and thus two kite base stations 218.1 and 218.2 (or 18.1 and 18.2; or 118.1 and 118.2) where the kites 222.1 and 222.2 of both systems 218.1 and 218.2 can thus be orientated in the operative mode or in the inoperative mode. With this, one kite can exert maximum traction force, to drive the ship and the generator(s) and one kite can exert a minimal traction force to reel-in the kite connecting line, without the necessity to move the kite base stations on board of the watercraft. Rather, the watercraft as a whole changes its wind course, when changing a kite control system from operative, energy generating mode to inoperative, retraction mode.

In this configuration both kites 222.1 and 222.2 can be operated at maximum angle of attack, or one kite at the leeward side of the watercraft 14 can be flown at maximum speed and angle of attack, while the other towards the windward side of the watercraft 14 can be flown at a reduced speed and angle of attack, or static, in order to minimise the heeling effect on the watercraft 14, and to expend minimum energy to retract the kite connecting line. The kite control system in the leeward position can reel-out the kite connecting line to generate electricity, and the kite control system in the windward position can retract the kite connecting line.

The Applicant considers the invention advantageous in that a kite driven watercraft power generating system is provided which is adapted to sequentially or simultaneously alternate, shift, or rotate a plurality of kite base stations from an inoperative into an operative kite flying mode to yield an uninterrupted mechanical energy supply for continuous propulsion of a watercraft and for conversion into storable energy. When applying the invention, the mechanical power supply, both for the ship's propulsion and for electricity generation, directly driving a generator by the kite's tractive forces, is therefore uninterrupted, continuous and non-cyclical (neglecting the short interruption times during change of location of the kite base stations).

According to the invention, always at least one kite, in the operative location (in the front and/or leeward position), produces power, both propulsion power for the watercraft and tractive power for the generator. Therefore, the propulsion power supply for the watercraft is continuous (the short interruptions during change of positions can be neglected, due to inertia of the watercraft). This allows for the system being used as a main propulsion system for watercrafts, and it also provides for a continuous power generation on the ship through the generator(s), for instance to efficiently produce electrofuels on board.

By applying the invention, there is only a limited need for kinetic-energy-harvesting rotors under water, or only a need for a limited size of such a rotor or rotors under water, or even no need at all for under-water rotors or complete turbines under water, to harvest the kite's traction forces.

Further, the specific shifting, displacement, alternation or rotation of the plurality of kite base stations into their operative location, and/or the pivotal suspension of the kite base stations about the waterline inside of the watercraft, avoids undesired torque on the watercraft's hull and therefore undesired heeling. The invention therefore reduces potential problems associated with torque and heeling, when inducing the tractive force of a kite or a plurality of kites onto a watercraft, either by lifting up the leeward side of the watercraft or by inducing the tractive force near the geometric centre of the watercraft's hull.

The addition of water turbines which can be submersed into water when the watercraft is propelled along a body of water, in certain circumstances, for instance on rather downwind courses, provides for additional efficiency of the overall system and for an additional source of energy, which would otherwise be lost by friction forces or other resistance drag forces at the watercraft's hull or by a loss in apparent wind. On these broad-reach or downwind courses, or whenever one wants to increase the resistance of the watercraft, with the aim to slow it down and/or to increase the tractive pull of the kite and therefore the driving of the generator(s) connected to the one or more kite connecting lines, the invention may comprise a mechanism to increase the resistance of the ship's hull, with the aim to slow down the ship, and hence increase the tension forces on the kite connecting line and hence power. This mechanism may just be in the simple form of a drogue parachute, a funnel-shaped or cone-shaped device pulled after the ship, or any other device which increases the drag of the ship, or it may even be in the form of hydrokinetic, under-water turbines, which may be lowered into the water at the time of need. These will not only increase the effectivity of the on-board generators (operatively connected to the kite connecting lines), but at the same time also generate additional electricity.

## Claims

1. A watercraft (14) comprising a kite driven power generating system (10), the kite driven power generating system (10) including:
at least two kite base stations (18.1, 18.2) which are mounted displaceably about the watercraft (14);
each kite base station (18.1, 18.2) configured to control at least one kite (22.1, 22.2) connected thereto;
each kite base station (18.1, 18.2) including means for adjusting the length of at least one kite connecting line (11), and, a generator (27) for converting tractive force exerted on the at least one kite connecting line (11) into electrical energy;
an orientation subsystem for displacing each of the at least two kite base stations (18.1, 18.2) between an operative (12), and, an inoperative location (16), respectively;
the operative (12) and inoperative location (16) being distinct locations defined about the watercraft (14);
wherein each of the at least two kite base stations (18.1, 18.2) is further configured to, when located in the operative location (12), orientate its kite (22.1, 22.2) in a wind harvesting and energy generating mode to exert a tractive force on the at least one kite connecting line (11) sufficient to reel out the at least one kite connecting line (11) to generate energy as it is reeled out, and to, when located in the inoperative location (16), orientate its kite (22.1, 22.2) in a kite retraction mode for exerting a relatively less tractive force on the at least one kite connecting line (11).

2. A watercraft (14) as claimed in claim 1 wherein the operative location (12) includes a plurality of operative locations.

3. A watercraft (14) as claimed in any one or more of claims 1 to 2 wherein the inoperative location (16) includes a plurality of inoperative locations.

4. A watercraft (14) as claimed in any one or more of the preceding claims wherein the operative location (12) is located towards the bow of the watercraft (14), in relation to the inoperative location (16).

5. A watercraft (14) as claimed in any one or more of the preceding claims wherein at least one of the kite base stations (18.1, 18.2) is rotatably mounted about the watercraft (14).

6. A watercraft (14) as claimed in any one or more of the preceding claims wherein the position of the operative location (12) is defined so as to allow the kite base station (18.1, 18.2) to, when in use, limit torque and heeling forces of the kite (22.1, 22.2) on the watercraft (14).

7. A watercraft (14) as claimed in any one or more of the preceding claims wherein the orientation subsystem is configured to alternate and/or rotate each of the plurality of kite base stations (18.1, 18.2) between the operative (12) and inoperative locations (16), respectively, so as to yield a substantial continuous supply of mechanical tractive force and conversion of mechanical tractive force into storable energy.

8. A watercraft (14) as claimed in any one or more of the preceding claims wherein the orientation subsystem includes a track (23) for guiding displacement of each of the plurality of kite base stations (18.1, 18.2) between the at least one operative (12), and, the at least one inoperative location (16), respectively.

9. A watercraft (14) as claimed in any one or more of the preceding claims wherein the orientation subsystem is configured to rotate at least two of the plurality of kite base stations (18.1, 18.2) around a common vertical axis.

10. A watercraft (14) as claimed in any one or more of the preceding claims wherein the orientation subsystem includes a rotatable base (20) having a pair of kite base stations (18.1, 18.2) mounted thereon and opposed one another, so as to when rotating the rotatable base (20), each of the pair of the kite base stations (18.1, 18.2) is displaced between the operative (12), and, inoperative locations (16).

11. A watercraft (14) as claimed in any one or more of the preceding claims wherein when in wind harvesting and / or operative mode and located in the operative location (12), the kite base station (18.1, 18.2) is configured to align and / or orientate its kite (22.1, 22.2), by configuring its kite control system and / or kite control device, having an increased angle of attack compared to when the kite base station (22.1, 22.2) is located in the inoperative location (16).

12. A watercraft (14) as claimed in any of the preceding claims wherein the at least one kite connecting line (11) is operably connected to the generator (27) located at the kite base station (18.1, 18.2) for converting mechanical tractive force exerted onto the at least one kite connecting line (11) into storable energy.

13. A watercraft (14) as claimed in any one or more of the preceding claims which includes at least one motor (29) located at any one of the kite base stations (18.1, 18.2) and operatively connected to the at least one kite connecting line (11) for reeling in the at least one kite connecting line (11).

14. A watercraft (14) as claimed in any one or more of the preceding claims which includes a water turbine subsystem (24) displaceably mounted about the watercraft (14) to be operable between an operative mode when submersed in water, and inoperative mode, when lifted out of the water, respectively.

15. A watercraft (14) as claimed in any one or more of the preceding claims which includes any one or more of the group consisting of an electrolyser, a hydrogen generator, a hydrogen storage, a hydrogen compression facility, a hydrogen liquefaction facility, a methanation facility, a carbon dioxide generator, a carbon dioxide storage, carbon dioxide harvester, a methane compression facility, a methane liquefaction facility, methanol generator, Fischer Tropsch reactor, and ammonia reactor for storing harvested energy.

## Patentansprüche

1. Wasserfahrzeug (14), das ein drachengetriebenes Stromerzeugungssystem (10) aufweist, wobei letzteres Folgendes umfasst:
wenigstens zwei Drachenbasisstationen (18.1, 18.2), die verschiebbar um das Wasserfahrzeug (14) angebracht sind;
wobei jede Drachenbasisstation (18.1, 18.2) zur Steuerung wenigstens eines mit ihr verbundenen Drachens (22.1, 22.2) ausgelegt ist;
wobei jede Drachenbasisstation (18.1, 18.2) eine Einrichtung zur Längeneinstellung wenigstens einer Drachenverbindungsleitung (11) und einen Generator (27) zur Umwandlung einer auf die wenigstens eine Drachenverbindungsleitung (11) ausgeübten Zugkraft in elektrische Energie umfasst;
ein Orientierungs-Teilsystem zur Verschiebung jeder der wenigstens zwei Drachenbasisstationen (18.1, 18.2) zwischen einer Betriebsposition (12) bzw. einer Ruheposition (16);
wobei die Betriebsposition (12) und die Ruheposition (16) um das Wasserfahrzeug (14) herum an unterschiedlichen Stellen ausgebildet sind;
worin jede der wenigstens zwei Drachenbasisstationen (18.1, 18.2), wenn sie sich in der Betriebsposition (12) befindet, ferner dazu ausgelegt ist, ihren Drachen (22.1, 22.2) in einem Windgewinnungs- und Energieerzeugungsmodus so auszurichten, dass eine Zugkraft auf die wenigstens eine Drachenverbindungsleitung (11) ausgeübt wird, die ausreicht, um die wenigstens eine Drachenverbindungsleitung (11) abzuwickeln, um Energie zu erzeugen während sie abgewickelt wird, und um, wenn sie sich in der Ruheposition (16) befindet, ihren Drachen (22.1, 22.2) in einem Drachenretraktionsmodus so auszurichten, dass eine verhältnismäßig geringe Zugkraft auf die wenigstens eine Drachenverbindungsleitung (11) ausgeübt wird.

2. Wasserfahrzeug (14) gemäß Anspruch 1, wobei die Betriebsposition (12) eine Vielzahl von Betriebspositionen beinhaltet.

3. Wasserfahrzeug (14) gemäß Anspruch 1 oder 2, wobei die Ruheposition (16) eine Vielzahl von Ruhepositionen beinhaltet.

4. Wasserfahrzeug (14) gemäß einem oder mehreren der vorhergehenden Ansprüche, wobei die Betriebsposition (12) in Bezug auf die Ruheposition (16) zum Bug des Wasserfahrzeugs (14) hin angeordnet ist.

5. Wasserfahrzeug (14) gemäß einem oder mehreren der vorhergehenden Ansprüche, wobei wenigstens eine der Drachenbasisstationen (18.1, 18.2) drehbar um das Wasserfahrzeug (14) gelagert ist.

6. Wasserfahrzeug (14) gemäß einem oder mehreren der vorhergehenden Ansprüche, wobei die Lage der Betriebsposition (12) so angeordnet ist, dass sie es der Drachenbasisstation (18.1, 18.2) bei deren Einsatz ermöglicht, Drehmoment- und Krängungskräfte des Drachens (22.1, 22.2) auf das Wasserfahrzeug (14) zu begrenzen.

7. Wasserfahrzeug (14) gemäß einem oder mehreren der vorhergehenden Ansprüche, wobei das Orientierungs-Teilsystem dazu ausgelegt ist, jede der Vielzahl von Drachenbasisstationen (18.1, 18.2) zwischen der Betriebsposition (12) bzw. der Ruheposition (16) zu alternieren und/oder zu drehen, um eine bedeutende, kontinuierliche Zufuhr von mechanischer Zugkraft und Umwandlung mechanischer Zugkraft in speicherbare Energie hervorzubringen.

8. Wasserfahrzeug (14) gemäß einem oder mehreren der vorhergehenden Ansprüche, wobei das Orientierungs-Teilsystem eine Spur (23) zum Führen einer Verschiebung jeder der Vielzahl von Drachenbasisstationen (18.1, 18.2) zwischen der wenigstens einen Betriebsposition (12) bzw. der wenigstens einen Ruheposition (16) aufweist.

9. Wasserfahrzeug (14) gemäß einem oder mehreren der vorhergehenden Ansprüche, wobei das Orientierungs-Teilsystem dazu ausgelegt ist, wenigstens zwei der Vielzahl von Drachenbasisstationen (18.1, 18.2) um eine gemeinsame vertikale Achse zu drehen.

10. Wasserfahrzeug (14) gemäß einem oder mehreren der vorhergehenden Ansprüche, wobei das Orientierungs-Teilsystem eine drehbare Basis (20) mit einem darauf angebrachten und einander gegenüberliegenden Paar von Drachenbasisstationen (18.1, 18.2) aufweist, sodass bei Drehung der drehbaren Basis (20) jede der beiden Drachenbasisstationen (18.1, 18.2) zwischen der Betriebsposition (12) und der Ruheposition (16) verschoben wird.

11. Wasserfahrzeug (14) gemäß einem oder mehreren der vorhergehenden Ansprüche, wobei die Drachenbasisstation (18.1, 18.2), wenn sie im Windgewinnungs- und/oder Betriebsmodus ist und sich in der Betriebsposition (12) befindet, dazu ausgelegt ist, ihren Drachen (22.1, 22.2) auszurichten und/oder zu orientieren, indem ihr Drachensteuersystem und/oder ihre Drachensteuervorrichtung mit einem erhöhten Anstellwinkel versehen ist, im Vergleich dazu, wenn sich die Drachenbasisstation (22.1, 22.2) in der Ruheposition (16) befindet.

12. Wasserfahrzeug (14) gemäß einem der vorhergehenden Ansprüche, wobei die wenigstens eine Drachenverbindungsleitung (11) funktionsfähig mit dem an der Drachenbasisstation (18.1, 18.2) angeordneten Generator (27) verbunden ist, um die auf die wenigstens eine Drachenverbindungsleitung (11) ausgeübte mechanische Zugkraft in speicherbare Energie umzuwandeln.

13. Wasserfahrzeug (14) gemäß einem oder mehreren der vorhergehenden Ansprüche, das wenigstens einen Motor (29) aufweist, der sich an einer der Drachenbasisstationen (18.1, 18.2) befindet und funktionsfähig mit der wenigstens einen Drachenverbindungsleitung (11) zum Aufrollen der wenigstens einen Drachenverbindungsleitung (11) verbunden ist.

14. Wasserfahrzeug (14) gemäß einem oder mehreren der vorhergehenden Ansprüche, das ein Wasserturbinen-Teilsystem (24) aufweist, das verschiebbar um das Wasserfahrzeug (14) gelagert ist, um zwischen einem Betriebsmodus, wenn es in Wasser eingetaucht ist, bzw. einem Ruhemodus, wenn es aus dem Wasser gehoben ist, funktionsfähig zu sein.

15. Wasserfahrzeug (14) gemäß einem oder mehreren der vorhergehenden Ansprüche, das eine oder mehrere Einrichtungen aus der Gruppe bestehend aus einem Elektrolyseur, einem Wasserstoffgenerator, einem Wasserstoffspeicher, einer Wasserstoffkompressionseinrichtung, einer Wasserstoffverflüssigungsanlage, einer Methanisierungsanlage, einem Kohlendioxidgenerator, einem Kohlendioxidspeicher, einer Kohlenstoffgewinnungseinrichtung, einer Methankompressionseinrichtung, einer Methanverflüssigungsanlage, einem Methanolgenerator, einem Fischer-Tropsch-Reaktor und einem Ammoniakreaktor aufweist, um gewonnene Energie zu speichern.

## Revendications

1. Embarcation (14) comprenant un système de génération d'énergie (10) à entraînement par cerf-volant, ce dernier système comprenant:
au moins deux stations de base (18.1, 18.2) de cerf-volant qui sont montées de manière déplaçable autour de l'embarcation (14);
chaque station de base (18.1, 18.2) de cerf-volant étant configurée pour commander au moins un cerf-volant (22.1, 22.2) relié à cette dernière;
chaque station de base (18.1, 18.2) de cerf-volant comprenant des moyens de réglage de la longueur d'au moins une ligne de liaison (11) de cerf-volant, et un générateur (27) pour convertir une force de traction exercée sur la ou les lignes de liaison (11) de cerf-volant en énergie électrique;
un sous-système d'orientation pour déplacer chacune des au moins deux stations de base (18.1, 18.2) de cerf-volant entre un emplacement de fonctionnement (12), et, respectivement, un emplacement de non fonctionnement (16);
les emplacements de fonctionnement (12) et de non fonctionnement (16) étant des emplacements distincts définis autour de l'embarcation (14);
dans laquelle chacune des au moins deux stations de base (18.1, 18.2) de cerf-volant est en outre configurée pour, lorsqu'elle est située dans l'emplacement de fonctionnement (12), orienter son cerf-volant (22.1, 22.2) dans un mode de collecte d'énergie éolienne et de génération d'énergie de sorte à exercer une force de traction sur la ou les lignes de liaison (11) de cerf-volant suffisante pour dérouler la ou les lignes de liaison (11) de cerf-volant pour générer de l'énergie à mesure qu'elle(s) est/sont déroulée(s), et pour, lorsqu'elle est située dans l'emplacement de non fonctionnement (16), orienter son cerf-volant (22.1, 22.2) dans un mode de rétraction de cerf-volant de sorte à exercer une force de traction relativement faible sur la ou les lignes de liaison (11) de cerf-volant.

2. Embarcation (14) selon la revendication 1, dans laquelle l'emplacement de fonctionnement (12) comprend une pluralité d'emplacements de fonctionnement.

3. Embarcation (14) selon les revendications 1 ou 2, dans laquelle l'emplacement de non fonctionnement (16) comprend une pluralité d'emplacements de non fonctionnement.

4. Embarcation (14) selon l'une quelconque ou plusieurs des revendications précédentes, dans laquelle l'emplacement de fonctionnement (12) est situé vers la proue de l'embarcation (14), par rapport à l'emplacement de non fonctionnement (16).

5. Embarcation (14) selon l'une quelconque ou plusieurs des revendications précédentes, dans laquelle au moins une des stations de base (18.1, 18.2) de cerf-volant est montée de manière rotative autour de l'embarcation (14).

6. Embarcation (14) selon l'une quelconque ou plusieurs des revendications précédentes, dans laquelle la position de l'emplacement de fonctionnement (12) est définie de façon à permettre à la station de base (18.1, 18.2) de cerf-volant de limiter, lors de l'utilisation, le couple et les forces de gîte du cerf-volant (22.1, 22.2) sur l'embarcation (14).

7. Embarcation (14) selon l'une quelconque ou plusieurs des revendications précédentes, dans laquelle le sous-système d'orientation est configuré de sorte à faire alterner et/ou faire tourner chacune de la pluralité de stations de base (18.1, 18.2) de cerf-volant entre les emplacements de fonctionnement (12) et, respectivement, de non fonctionnement (16), de manière à produire une alimentation continue importante de force de traction mécanique et une conversion de force de traction mécanique en énergie stockable.

8. Embarcation (14) selon l'une quelconque ou plusieurs des revendications précédentes, dans laquelle le sous-système d'orientation comprend une piste (23) pour guider le déplacement de chacune de la pluralité de stations de base (18.1, 18.2) de cerf-volant entre le ou les emplacements de fonctionnement (12) et, respectivement, le ou les emplacements de non fonctionnement (16).

9. Embarcation (14) selon l'une quelconque ou plusieurs des revendications précédentes, dans laquelle le sous-système d'orientation est configuré de manière à faire tourner au moins deux de la pluralité de stations de base (18.1, 18.2) de cerf-volant autour d'un axe vertical commun.

10. Embarcation (14) selon l'une quelconque ou plusieurs des revendications précédentes, dans laquelle le sous-système d'orientation comprend une base rotative (20) pourvue d'une paire de stations de base (18.1, 18.2) de cerf-volant, montée sur ladite base rotative (20) et à l'opposé l'une de l'autre, de sorte que, lors de la rotation de la base rotative (20), chacune de la paire de stations de base (18.1, 18.2) de cerf-volant soit déplacée entre les emplacements de fonctionnement (12) et de non fonctionnement (16).

11. Embarcation (14) selon l'une quelconque ou plusieurs des revendications précédentes, dans laquelle, dans le mode de collecte d'énergie éolienne et/ou le mode de fonctionnement et lorsque située dans l'emplacement de fonctionnement (12), la station de base (18.1, 18.2) de cerf-volant est configurée de manière à aligner et/ou orienter son cerf-volant (22.1, 22.2) en configurant son système de commande de cerf-volant et/ou son dispositif de commande de cerf-volant avec un angle d'attaque accru par rapport au moment où la station de base de cerf-volant (22.1, 22.2) est située dans l'emplacement de non fonctionnement (16).

12. Embarcation (14) selon l'une quelconque des revendications précédentes, dans laquelle la ou les lignes de liaison (11) de cerf-volant est/sont reliée(s) de manière fonctionnelle au générateur (27) situé au niveau de la station de base (18.1, 18.2) de cerf-volant pour convertir la force de traction mécanique exercée sur la ou les lignes de liaison (11) de cerf-volant en énergie stockable.

13. Embarcation (14) selon l'une quelconque ou plusieurs des revendications précédentes qui comprend au moins un moteur (29) situé au niveau d'une quelconque des stations de base (18.1, 18.2) de cerf-volant et relié de manière opérationnelle à la ou aux lignes de liaison (11) de cerf-volant pour enrouler la ou les lignes de liaison (11) de cerf-volant.

14. Embarcation (14) selon l'une quelconque ou plusieurs des revendications précédentes qui comprend un sous-système de turbine à eau monté de manière déplaçable autour de l'embarcation (14) pour pouvoir fonctionner entre un mode de fonctionnement lorsqu'il est immergé dans l'eau, et, respectivement, un mode de non fonctionnement lorsqu'il est soulevé hors de l'eau.

15. Embarcation (14) selon l'une quelconque ou plusieurs des revendications précédentes qui comprend l'un quelconque ou plusieurs éléments du groupe constitué d'un électrolyseur, d'un générateur d'hydrogène, d'un moyen de stockage d'hydrogène, d'une installation de compression d'hydrogène, d'une installation de liquéfaction d'hydrogène, d'une installation de méthanation, d'un générateur de dioxyde de carbone, d'un moyen de stockage de dioxyde de carbone, d'un moyen de récupération de dioxyde de carbone, d'une installation de compression de méthane, d'une installation de liquéfaction de méthane, d'un générateur de méthanol, d'un réacteur Fischer Tropsch et d'un réacteur à ammoniac pour le stockage d'énergie collectée.
